(19) Europäisches Patentamt
European Patent Office
Office européen des brevets

(11) **EP 4 265 574 A1**

(12) **EUROPEAN PATENT APPLICATION**
published in accordance with Art. 153(4) EPC

(43) Date of publication:
**25.10.2023 Bulletin 2023/43**

(21) Application number: **21906584.4**

(22) Date of filing: **13.12.2021**

(51) International Patent Classification (IPC):
*C03C 13/00* [(2006.01)]        *B29B 11/16* [(2006.01)]
*D02G 3/18* [(2006.01)]        *D02G 3/44* [(2006.01)]
*B29K 105/10* [(2006.01)]

(52) Cooperative Patent Classification (CPC):
**B29B 11/16; C03C 13/00; D02G 3/18; D02G 3/44;**
B29K 2105/10

(86) International application number:
**PCT/JP2021/045870**

(87) International publication number:
**WO 2022/131222 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.12.2020 JP 2020207601**

(71) Applicant: **NIPPON SHEET GLASS COMPANY,
LIMITED
Tokyo 108-6321 (JP)**

(72) Inventors:
• **KAWAGUCHI, Satoru**
 **Tokyo 108-6321 (JP)**
• **FUKUCHI, Hidetoshi**
 **Tokyo 108-6321 (JP)**
• **NAKAMURA, Aya**
 **Tokyo 108-6321 (JP)**

(74) Representative: **Cabinet Beau de Loménie
158, rue de l'Université
75340 Paris Cedex 07 (FR)**

(54) **REINFORCING GLASS FIBER, CHOPPED STRAND, FIBER SHEET, AND ROD**

(57)    The present invention provides a new reinforcing glass fiber suitable for reinforcement of various products. The reinforcing glass fiber according to the present invention includes $SiO_2$, $Al_2O_3$, and $Fe_2O_3$. In the reinforcing glass fiber, the $Fe_2O_3$ content is 12 to 25 mass%. The reinforcing glass fiber is used for reinforcement of various products such as concrete products, rubber products, and plastic products.

FIG.3A

**Description**

TECHNICAL FIELD

The present invention relates to a reinforcing glass fiber, a chopped strand, a fiber sheet, and a rod.

BACKGROUND ART

Glass fibers are used as reinforcing materials for products to which a stress is applied. Glass fibers are appropriately processed into an appropriate form according to intended applications. In one example, a rubber-reinforcing cord including a strand formed of a bundle of glass fibers is used for reinforcement of rubber products. Rubber-reinforcing cords embedded in rubber products such as rubber belts and tires reduce stretching of the rubber products and degradation in strength thereof and contribute to improvement of the dimensional stabilities of the rubber products and elongation of the fatigue lives thereof. Patent Literature 1 discloses a glass fiber configured to be included in rubber-reinforcing cords.

CITATION LIST

Patent Literature

Patent Literature 1: WO 2006/057405 A1

SUMMARY OF INVENTION

Technical Problem

A new reinforcing glass fiber suitable for reinforcement of various products such as concrete products has been demanded.
Therefore, the present invention aims to provide a new reinforcing glass fiber suitable for reinforcement of various products.

Solution to Problem

Through intensive studies, the present inventors have newly found that properties of a reinforcing glass fiber are improved by appropriately adjusting the $Fe_2O_3$ content, and have completed the present invention. $Fe_2O_3$ is one of the components included in the reinforcing glass fiber.
The present invention provides a reinforcing glass fiber including:

$SiO_2$;

$Al_2O_3$; and

$Fe_2O_3$,

wherein
an $Fe_2O_3$ content is 12 to 25 mass%.
The present invention also provides a chopped strand including the above reinforcing glass fiber.
The present invention also provides a fiber sheet including the above reinforcing glass fiber.
The present invention also provides a rod including the above reinforcing glass fiber.

Advantageous Effects of Invention

The present invention can provide a new reinforcing glass fiber suitable for reinforcement of various products.

BRIEF DESCRIPTION OF DRAWINGS

FIG. 1 shows an example of a spinning apparatus for producing a reinforcing glass fiber.
FIG. 2 shows an example of an apparatus for producing a chopped strand.
FIG. 3A is a perspective view showing an exemplary concrete product.
FIG. 3B is an enlarged cross-sectional view of the concrete product shown in FIG. 3A.
FIG. 4 shows another exemplary concrete product.
FIG. 5 shows an example of a structure of a rubber belt including a rubber-reinforcing cord.

DESCRIPTION OF EMBODIMENTS

Hereinafter, the present invention will be described in detail. The following description is not intended to limit the present invention to specific embodiments.

[Reinforcing glass fiber]

A reinforcing glass fiber of the present embodiment includes $SiO_2$, $Al_2O_3$, and $Fe_2O_3$, and may further include CaO. An $Fe_2O_3$ content is 12 to 25 mass% in the reinforcing glass fiber of the present embodiment.
Herein, $SiO_2$ may be called "S component", and a $SiO_2$ content may be expressed as [S]. $Al_2O_3$ may be called "A component", and an $Al_2O_3$ content may be expressed as [A]. $Fe_2O_3$ may be called "F component", and the $Fe_2O_3$ content may be expressed as [F]. CaO may be called "C component", and a CaO content may be expressed as [C].
$SiO_2$ is an essential main component forming a glass network. Moreover, $SiO_2$ is a component for adjusting the devitrification temperature and the viscosity of the glass, and is also a component for improving chemical durabilities, especially the acid resistance. Too low a $SiO_2$ content can decrease the acid resistance. On the other hand, too high a $SiO_2$ content can decrease the elastic modulus (such as Young's modulus). The $SiO_2$ content is, for example, 40 mass% or more, and may be 43 mass% or more, 45 mass% or more, 48 mass% or more, 50 mass% or more, or even 53 mass% or more. The $SiO_2$ content is, for example, 68 mass% or less, and may be 65 mass% or less, 63 mass% or less, or even 60 mass% or less. The $SiO_2$ content is preferably 50 to 63 mass%, and may be, in some cases, 40 to 50 mass%.
$Al_2O_3$ is a component forming the glass network, and is also a component for adjusting the devitrification temperature and the viscosity of the glass. Moreover, $Al_2O_3$ is a component for improving the chemical durabilities, especially the water resistance. At the same time, $Al_2O_3$ is a component decreasing the acid resistance among the chemical durabilities. Too low an $Al_2O_3$ content can decrease the water resistance. On the other hand, too high an $Al_2O_3$ content can decrease the acid resistance and the alkali resistance. The $Al_2O_3$ content is, for example, 2 mass% or more, and may be 5 mass% or more, 7 mass% or more, or even 10 mass% or more. The $Al_2O_3$ content is, for example, 20 mass% or less, and may be 15 mass% or less. The $Al_2O_3$ content is preferably 5 to 15 mass%.
In the reinforcing glass fiber, a sum of the $SiO_2$ content and the $Al_2O_3$ content is, for example, 40 to 70 mass%. When the sum of [S] and [A] is less than 40 mass% or more than 70 mass%, melt-spinning efficiency of raw materials of the reinforcing glass fiber can decrease because of too high a melting temperature of the raw materials, too high a viscosity of a melt of the raw materials, or too low a viscosity of the melt of the raw materials. The sum of the $SiO_2$ content and the $Al_2O_3$ content is preferably 50 mass% or more, and more preferably 55 mass% or more. The sum of the $SiO_2$ content and the $Al_2O_3$ content may be 65 mass% or less.
In the reinforcing glass fiber, a ratio ([A]/([A] + [S])) of the $Al_2O_3$ content to the sum of the $SiO_2$ content and the $Al_2O_3$ content is, for example, 0.10 to 0.40, and preferably 0.15 to 0.40. If [A]/([A] + [S]) is less than 0.10 or more than 0.40, the melt-spinning efficiency of the raw materials of the reinforcing glass fiber can decrease. The ratio [A]/([A] + [S]) is preferably 0.35 or less, more preferably 0.30 or less, even more preferably 0.25 or less, and particularly preferably 0.20 or less.
$Fe_2O_3$ plays an important role in the reinforcing glass fiber of the present embodiment. That is, when the $Fe_2O_3$ content in the reinforcing glass fiber is in an appropriate range, the reinforcing glass fiber has improved acid resistance and alkali resistance. Moreover, $Fe_2O_3$ can decrease a cost of using the raw materials because $Fe_2O_3$ as a raw material exists in a large amount. Furthermore, $Fe_2O_3$ can improve the elastic modulus of the reinforcing glass fiber. However, too much $Fe_2O_3$ in the reinforcing glass fiber can decrease the acid resistance and cause devitrification. The $Fe_2O_3$ content in the reinforcing glass fiber is 12 to 25 mass%. If the $Fe_2O_3$ content is more than 25 mass%, the melt of the raw materials of the reinforcing glass fiber has such a low viscosity that it can be difficult to produce the reinforcing glass fiber. If the $Fe_2O_3$ content is more than 25 mass%, the acid resistance can also decrease. The $Fe_2O_3$ content is preferably 15 mass% or more, and may be 17 mass% or more. The $Fe_2O_3$ content is preferably 23 mass% or less, more preferably 20 mass% or less. The $Fe_2O_3$ content is preferably 15 to 25 mass%, more preferably 15 to 23 mass%, and may be, in some cases, 20 to 25 mass%.
It should be noted that the $Fe_2O_3$ content is often set to 1 mass% or less for conventional glass fibers. For the reinforcing glass fiber of the present embodiment, the $Fe_2O_3$ content is adjusted to 12 to 25 mass%, which makes it possible to reduce a batch cost for production of the reinforcing glass fiber, improve the acid resistance and the alkali resistance, and achieve a high elastic modulus. A high $Fe_2O_3$ content can color the reinforcing glass fiber. The reinforcing glass fiber of the present embodiment is suitable for applications where coloring is not a problem, particularly for reinforcement of concrete products and rubber products.

CaO is a component for improving the alkali resistance, especially the cement resistance. Moreover, CaO is likely to improve the elastic modulus of the reinforcing glass fiber. The CaO content in the reinforcing glass fiber is, for example, 5 to 30 mass%. The CaO content being less than 5 mass% is not preferable in terms of energy saving because, in that case, the temperature at which the raw materials of the reinforcing glass fiber starts to melt is high. Additionally, in that case, the alkali resistance tends to be inferior. If the CaO content is more than 30 mass%, the melt of the raw materials of the reinforcing glass fiber has such a low viscosity that it can be difficult to produce the reinforcing glass fiber. The CaO content is preferably 10 mass% or more, and may be 13 mass% or more, 15 mass% or more, 17 mass% or more, or 20 mass% or more. The CaO content may be 25 mass% or less. The CaO content may be 18 to 30 mass%, in some cases, 15 to 25 mass%, or 20 to 30 mass%.

From the viewpoint of improving the elastic modulus and the alkali resistance of the reinforcing glass fiber, it is preferable that the CaO content be 18 to 30 mass% and the $Fe_2O_3$ content be 15 to 25 mass% in the reinforcing glass fiber. From the same viewpoint, the CaO content and the $Fe_2O_3$ content may be 15 to 25 mass% and 15 to 23 mass%, respectively, in the reinforcing glass fiber. In the reinforcing glass fiber, a sum of the CaO content and the $Fe_2O_3$ content is, for example, 30 mass% or more, and may be 31 mass% or more, 33 mass% or more, or even 35 mass% or more. The sum of the CaO content and the $Fe_2O_3$ content is, for example, 60 mass% or less, and may be 50 mass% or less.

In the reinforcing glass fiber of the present embodiment, the $Fe_2O_3$ content is appropriately adjusted, and, as necessary, the sum of the $SiO_2$ content and the $Al_2O_3$ content, a mass ratio calculated by $Al_2O_3/(SiO_2 + Al_2O_3)$, the CaO content, and the like are also appropriately adjusted. Because of this, the reinforcing glass fiber tends to be excellent in mechanical properties such as elastic modulus and chemical durabilities such as alkali resistance and acid resistance, compared to conventional reinforcing glass fibers.

The reinforcing glass fiber of the present embodiment may further include a component other than the above components. For example, the reinforcing glass fiber may include a minor component derived from impurities in the raw materials, a manufacturing apparatus, or the like. Examples of the minor component include MgO, $Na_2O$, $K_2O$, $TiO_2$, and $CrO_2$. The minor component content in the reinforcing glass fiber is, for example, less than 10 mass%, and may be less than 5 mass%.

The method for producing the reinforcing glass fiber is not limited to a particular one, and is, for example, a method including: a step of making a melt from the raw materials; and a step of spinning the melt into the reinforcing glass fiber. The raw material of the reinforcing glass fiber may be a mixture of separate compounds $SiO_2$, $Al_2O_3$, $Fe_2O_3$, and CaO, or may be, in terms of cost, a mixture including at least one selected from the group consisting of a silica source that is rich in $SiO_2$, an alumina source that is rich in $Al_2O_3$, a silica-alumina source that is rich in both $SiO_2$ and $Al_2O_3$, an iron oxide source that is rich in $Fe_2O_3$, and a calcium oxide source that is rich in CaO. The composition of each mixture may be adjusted by mixing a high-purity raw material with raw materials such as the above silica source.

The silica source is not limited to a particular one. Examples of the silica source include amorphous silica, silica sand, fumed silica, and volcanic ash.

The alumina source is not limited to a particular one. Examples of the alumina source include alumina and other ores such as mullite.

The silica-alumina source is not limited to a particular one. Examples of the silica-alumina source include kaolinite, montmorillonite, feldspar, and zeolite.

The iron oxide source is not limited to a particular one. Examples of the iron oxide source include iron oxide, iron hydroxide, and iron ores.

The calcium oxide source is not limited to a particular one. Examples of the calcium oxide source include calcium carbonate and other ores such as calcite and dolomite.

Other than those described above as examples, a thermal power generation waste or a metal refining waste can be used as one of the silica source, the alumina source, the silica-alumina source, the iron oxide source, and the calcium oxide source.

Examples of the thermal power generation waste include fly ash and clinker ash. Fly ash and clinker ash are rich in $SiO_2$ and $Al_2O_3$ and are therefore suitable as the silica-alumina source. However, because the $Fe_2O_3$ content tends to be low in fly ash and clinker ash, it is difficult to produce the reinforcing glass fiber of the present embodiment using fly ash or clinker ash alone. When fly ash or clinker ash is used, addition of an appropriate amount of the iron oxide source makes it possible to produce the reinforcing glass fiber of the present embodiment at a low cost. It should be noted that coal gasification slag (CGS) produced as a waste from integrated coal gasification combined cycle (IGCC) has almost the same chemical composition as that of fly ash. Therefore, coal gasification slag can also be used as the silica-alumina source. Coal gasification slag, which is granular, has the advantage of being excellent in handleability.

Examples of the metal refining waste include steel slag and copper slag. For its high CaO content, steel slag can be used as the calcium oxide source. Examples of steel slag include blast furnace slag, converter slag, and reducing slag. For its high $Fe_2O_3$ content, copper slag can be used as the iron oxide source.

As described above, fly ash, clinker ash, or coal gasification slag can be used as the silica-alumina source. Copper slag can be used as the iron oxide source. Steel slag can be used as the calcium oxide source. That is, industrial wastes can be used as the silica-alumina source, the iron oxide source, and the calcium oxide source.

Other than those described above as examples, a volcanic rock typified by basalt or andesite can be used as the silica-alumina source.

Tables 1 to 3 below show specific examples of the composition of the above-described silica-alumina source, iron oxide source, and calcium oxide source. FA(1) to FA(9) and FA(12) in Tables 1 and 2 are examples of the composition of fly ashes discharged from thermal power plants in Japan. FA(10) in Table 2 is an example of the composition of a copper slag produced in a copper smelting plant in Japan. FA(11) is an example of the composition of a coal gasification slag discharged from an integrated coal gasification combined cycle power plant in Japan. FA(13) is an example of the composition of a blast furnace slag produced in an ironworks in Japan. FA(14) is an example of the composition of a reducing slag produced in an ironworks in Japan. BA(1) and BA(2) in Table 3 are examples of the composition of basaltic rocks (volcanic rocks) having a specifically high iron oxide content and taken in Akita Prefecture and Fukui Prefecture. Values for each composition in Tables 1 to 3 were measured by fluorescent X-ray analysis.

[Table 1]

| <Composition of fly ashes; unit: mass%> | | | | | | |
|---|---|---|---|---|---|---|
| Component | FA(1) | FA(2) | FA(3) | FA(4) | FA(5) | FA(6) |
| $Fe_2O_3$ [F] | 10 | 5 | 5 | 9 | 10 | 14 |
| $SiO_2$ [S] | 53 | 61 | 57 | 72 | 51 | 59 |
| $Al_2O_3$ [A] | 13 | 25 | 18 | 11 | 18 | 25 |
| CaO [C] | 17 | 0 | 3 | 3 | 12 | 1 |
| Others | 7 | 9 | 17 | 5 | 9 | 1 |

[Table 2]

| <Composition of fly ashes and slags; unit: mass%> | | | | | | | | |
|---|---|---|---|---|---|---|---|---|
| Component | FA(7) | FA(8) | FA(9) | FA(10) | FA(11) | FA(12) | FA(13) | FA(14) |
| $Fe_2O_3$ [F] | 9 | 13 | 15 | 55 | 9 | 1 | 0 | 1 |
| $SiO_2$ [S] | 62 | 60 | 59 | 35 | 54 | 73 | 34 | 19 |
| $Al_2O_3$ [A] | 18 | 15 | 15 | 5 | 11 | 22 | 13 | 17 |
| CaO [C] | 3 | 5 | 3 | 2 | 17 | 0 | 42 | 55 |
| Others | 8 | 7 | 8 | 3 | 9 | 4 | 11 | 8 |
| Remarks | | | | Copper slag | Coal gasification slag | | Blast furnace slag | Reducing slag |

[Table 3]

| <Composition of volcanic rocks; unit: mass%> | | |
|---|---|---|
| Component | BA(1) | BA(2) |
| $Fe_2O_3$ [F] | 19 | 18 |
| $SiO_2$ [S] | 46 | 25 |
| $Al_2O_3$ [A] | 11 | 10 |
| CaO [C] | 17 | 3 |
| Others | 7 | 44 |

In the production method of the present embodiment, the melt made by melting the raw materials and not yet solidified may be spun into a fiber. This method is called a direct melt process. The production method of the present embodiment may be a method in which the step of making the melt from the above raw materials includes a step of solidifying the molten raw materials to obtain a solidified body and a step of melting the solidified body to make the melt. Since the solidified body which is an intermediate material is called a marble, this method is known as a marble melt process.

The melting of the raw materials and the solidified body is performed, for example, in a melting furnace. In the step of spinning the melt into the reinforcing glass fiber in the production method of the present embodiment, the reinforcing glass fiber may be produced continuously using a bushing provided at the bottom of the melting furnace.

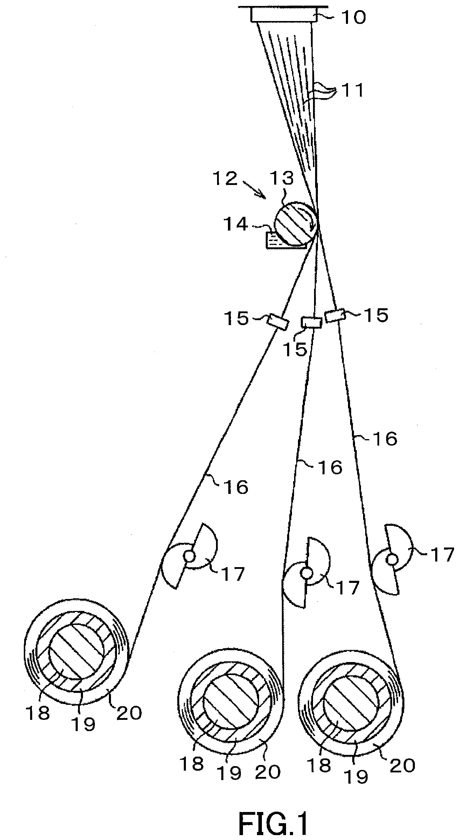

FIG. 1 shows an example of a spinning apparatus for producing the reinforcing glass fiber. As shown in FIG. 1, a melt molten in a melting furnace is drawn through a bushing 10 having a large number of nozzles (e.g., 2400 nozzles) at its bottom to form a large number of reinforcing glass fibers 11. After cooling water is sprayed on the reinforcing glass fibers 11, a binder (sizing agent) 14 may be applied to the reinforcing glass fibers 11 by an application roller 13 of a binder applicator 12. The large number of reinforcing glass fibers 11 with the applied binder 14 thereon may be bundled into strands 16 through reinforcing pads 15, the strands 16 each being formed of, for example, about 800 reinforcing glass fibers 11. While being traversed by a traverse finger 17, each strand 16 may be wound on a cylindrical tube 19 mounted on a collet 18. The cylindrical tube 19 with the wound strand 16 is detached from the collet 18 to obtain a cake (wound strand body) 20. The detail of the strand will be described later.

The reinforcing glass fiber is, for example, a long fiber. The reinforcing glass fiber may be a short fiber in some cases.

The diameter of the reinforcing glass fiber can be 15 $\mu$m or less, or even 10 $\mu$m or less. When the reinforcing glass fiber has such a smaller diameter, the use of a number of the reinforcing glass fibers bundled into a strand makes the strand more flexible and bendy in a reinforcing cord. The reinforcing glass fiber having such a smaller diameter can consequently improve the bending strength of the cord. Moreover, the reinforcing glass fiber having such a smaller diameter can reduce the cross-section area of the cord while maintaining the strength. The lower limit of the diameter of the reinforcing glass fiber is not limited to a particular one, and is, for example, 2 $\mu$m, and may be 3 $\mu$m. However, the reinforcing glass fiber may be so thick that its diameter is about more than 15 $\mu$m, or even about 20 $\mu$m or more.

A variation in diameter of the reinforcing glass fiber can be $\pm 3$ $\mu$m or less, or even $\pm 2$ $\mu$m or less. A reinforcing glass fiber having a greatly varying and non-constant diameter is likely to be stressed because of its wavy outer shape, resulting in a decrease in bending strength. Therefore, the variation in diameter of the reinforcing glass fiber is desirably small. Herein, the variation in diameter of the reinforcing glass fiber is determined by measuring the diameter of the reinforcing glass fiber at any 50 points and determining a difference (expressed with +) between the simple average and the largest value of the resulting values and a difference (expressed with -) between the simple average and the smallest value of the resulting values. The diameter of the reinforcing glass fiber can be determined by simple averaging as described above.

A cross-section of the reinforcing glass fiber is, for example, an approximate circle, and the roundness thereof can be 0.7 or more. Herein, the roundness is a value defined as ($4\pi S/L^2$), where the cross-section area of the reinforcing glass fiber is S and the length of the perimeter of the cross-section is L. A cross-section having a roundness of 1 is a perfect circle. Specifically, the roundness of the reinforcing glass fiber can be measured using a scanning electron microscope. For the measurement, image processing software such as Image J by Wayne Rasband is conveniently used.

The density of the reinforcing glass fiber is not limited to a particular one, and is, for example, 2.4 to 2.8 g/cm$^3$.

Because the reinforcing glass fiber of the present embodiment is highly amorphous, the reinforcing glass fiber of the present embodiment hardly experiences a strength reduction attributed to separation at an interface between a crystalline phase and an amorphous phase and thus has a high strength. The degree of amorphousness, which is a measure of non-crystallinity, of the reinforcing glass fiber is commonly 90% or more, and may be 95% or more although depending on the composition of the reinforcing glass fiber. The degree of amorphousness can be calculated from an X-ray diffraction (XRD) spectrum by the following equation (1).

$$\text{Degree of amorphousness (\%)} = [\text{Ia}/(\text{Ic} + \text{Ia})] \times 100 \qquad (1)$$

(In the equation (1), Ic is a sum of integrals of scattering intensity of a crystalline peak determined by X-ray diffraction analysis for the reinforcing glass fiber, and Ia is a sum of integrals of scattering intensity of an amorphous halo.)

The reinforcing glass fiber, for example, consists essentially of an amorphous phase. The reinforcing glass fiber's consisting essentially of an amorphous phase means that only an amorphous halo is observed and no peak attributable to a crystalline phase is observed in an X-ray diffraction spectrum of the reinforcing glass fiber.

The reinforcing glass fiber of the present embodiment has, for example, excellent mechanical properties. In one example, the reinforcing glass fiber has an elastic modulus (Young's modulus) E of, for example, 80 MPa or more, preferably 85 MPa or more, more preferably 90 MPa or more. The reinforcing glass fiber having an elastic modulus of 85 MPa or more, particularly 90 MPa or more, is particularly suitable for reinforcement of rubber products and plastic products. The upper limit of the elastic modulus E of the reinforcing glass fiber is not limited to a particular one, and may be, for example, 100 MPa. The elastic modulus E (MPa) of the reinforcing glass fiber can be calculated by the following formula. A longitudinal wave velocity $v_l$ (m/s) and a transverse wave velocity $v_t$ (m/s) are measured by a common ultrasonic method for an elastic wave propagating through a specimen. A density $\rho$ (kg/m$^3$) is separately measured for the specimen by Archimedes' principle. The specimen used in the ultrasonic method and Archimedes' principle is specifically, for example, a plate-shaped glass specimen having the same composition as that of the reinforcing glass fiber.

$$E = 10^{-6} \cdot \rho \cdot v_t^2 \cdot (v_l^2 - 4/3 \cdot v_t^2)/(v_l^2 - v_t^2)$$

The reinforcing glass fiber has a tensile strength of, for example, 2500 N/mm$^2$ or more, preferably 3000 N/mm$^2$ or more, more preferably 3500 N/mm$^2$ or more, even more preferably 4000 N/mm$^2$ or more, particularly preferably 4500 N/mm$^2$ or more, and most preferably 4900 N/mm$^2$ or more, which is beyond the tensile strength of a high-strength and high-elastic glass (for example, S-2 Glass from AGY Holding Corp.). The upper limit of the tensile strength of the reinforcing glass fiber is not limited to particular one, and is, for example, 10000 N/mm$^2$, and may be 5000 N/mm$^2$. The tensile strength of the reinforcing glass fiber can be measured by a method in accordance with JIS R 1657: 2003.

The tensile elastic modulus of the reinforcing glass fiber is, for example, $0.8 \times 10^5$ kN/mm$^2$ or more, and preferably $1.0 \times 10^5$ kN/mm$^2$ or more, which is beyond the tensile elastic modulus of a high-strength and high-elastic glass (for example, MAGNAVI (registered trademark) from Nippon Sheet Glass Co., Ltd.). The tensile elastic modulus of the reinforcing glass fiber can be measured by a method in accordance with the method A defined in JIS R 1657: 2003.

The reinforcing glass fiber of the present embodiment is also likely to have an excellent thermal stability. The reinforcing glass fiber has a glass-transition point Tg of, for example, 700°C or higher, preferably 850°C or higher, which is beyond the glass-transition point of a high-strength and high-elastic glass (for example, S-2 Glass from AGY Holding Corp., T glass from Nitto Boseki Co., Ltd., or U glass from Nippon Sheet Glass Co., Ltd.), more preferably 900°C or higher, and even more preferably 1000°C or higher. The upper limit of the glass-transition point Tg of the reinforcing glass fiber is not limited to a particular one, and is, for example, 1500°C. The glass-transition point Tg can be measured using a commercially-available differential thermal analyzer.

The reinforcing glass fiber of the present embodiment is also likely to be excellent in chemical durabilities (such as alkali resistance and acid resistance). The alkali resistance can be assessed, for example, from a mass decrease rate $\Delta W_{BASE}$ determined by a later-described method. The mass decrease rate $\Delta W_{BASE}$ of the reinforcing glass fiber is, for example, 0.30 mass% or less, preferably 0.25 mass% or less, or more preferably 0.20 mass% or less. The reinforcing glass fiber having a low mass decrease rate $\Delta W_{BASE}$ and a high alkali resistance is suitable for reinforcement of concrete products and plastic products. In particular, when the reinforcing glass fiber is used for reinforcement of concrete products, the reinforcing glass fiber tends to be required to have a high alkali resistance.

The mass decrease rate $\Delta W_{BASE}$ can be measured by the following method in accordance with the Japanese Optical Glass Industrial Standards "Measuring Method for Chemical Durability of Optical Glass (Powder Method)" (JOGIS 06). First, the reinforcing glass fiber (or a plate-shaped glass specimen having the same composition as that of the reinforcing glass fiber) is crushed. From the crushed specimen is separated a specimen passing through a 600 $\mu$m test sieve and retained on a 425 $\mu$m test sieve. The obtained specimen is defined as a measurement specimen. Incidentally, the test sieves are those defined in JIS Z 8801. Next, the measurement specimen is weighed and immersed for 1 hour in an aqueous sodium hydroxide solution having a temperature of 99°C and a concentration of 10 mass%. The amount of the aqueous sodium hydroxide solution used is sufficient for the measurement specimen. For example, an amount of 80 mL of the aqueous sodium hydroxide solution is used for 5 g of the measurement specimen. After the immersion, the supernatant is removed by decantation. The residual specimen is dried to be solidified, and is measured for its mass. A ratio of the difference between the mass of the measurement specimen and the mass of the residual specimen to the mass of the measurement specimen before the immersion in the aqueous sodium hydroxide solution is calculated, and the resulting value can be defined as the mass decrease rate $\Delta W_{BASE}$.

The acid resistance can be assessed, for example, from a mass decrease rate $\Delta W_{ACID}$. The mass decrease rate $\Delta W_{ACID}$ of the reinforcing glass fiber is, for example, 1.50 mass% or less, preferably 1.00 mass% or less, more preferably 0.50 mass% or less, and even more preferably 0.20 mass% or less. The reinforcing glass fiber having a low mass decrease rate $\Delta W_{ACID}$ and an excellent acid resistance is suitable for reinforcement of plastic products. The mass decrease rate $\Delta W_{ACID}$ can be measured by the same method as for the mass decrease rate $\Delta W_{BASE}$, except that an aqueous sulfuric acid solution having a temperature of 99°C and a concentration of 21.2 mass% is used instead of the aqueous sodium hydroxide solution.

The reinforcing glass fiber of the present embodiment can be used for reinforcement of various products. For example, the reinforcing glass fiber may be used for reinforcement of concrete products, rubber products, and plastic products.

(Reinforcement of concrete product)

As described above, the reinforcing glass fiber may be used for reinforcement of concrete products. In another aspect, the present invention provides a concrete product including the reinforcing glass fiber of the present embodiment. In a preferred embodiment, the concrete product includes a cement composition and the reinforcing glass fiber embedded in the cement composition. In another preferred embodiment, the concrete product includes a main portion and a coating member coating a surface of the main portion, and the coating member includes the reinforcing glass fiber. The coating member may further include, for example, a material such as a resin or a cement.

The reinforcing glass fiber may be processed as appropriate according to, for example, the kind of concrete product. Specifically, a chopped strand, a fiber sheet, a rod, and the like can be used for reinforcement of the concrete product. In another aspect, the present invention provides a chopped strand including the reinforcing glass fiber of the present embodiment, a fiber sheet including the reinforcing glass fiber of the present embodiment, a rod including the reinforcing glass fiber of the present embodiment, and the like.

[Chopped strand]

The chopped strand including the reinforcing glass fiber can be produced, for example, by cutting a strand formed of a bundle of the reinforcing glass fibers. The number of reinforcing glass fibers included in the strand is, for example, but not particularly limited to, 100 to 10,000, and typically 400 to 4,000. In spinning into reinforcing glass fibers, the strand can be formed by bundling a given number of spun reinforcing glass fibers using a sizing agent, such as an elastomer-based sizing agent, commonly used for formation of a strand. The formed strand may be wound around, for example, a collet, and may be subjected to a given treatment such as drying. The strand can be produced by the method described by reference to FIG. 1.

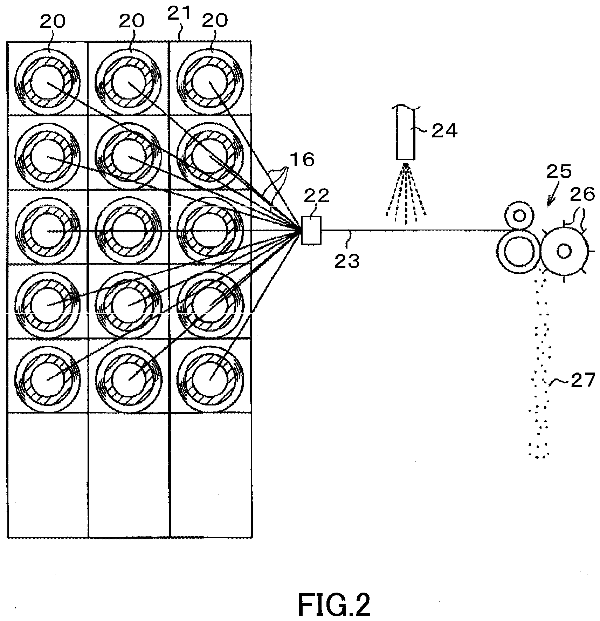

FIG. 2 shows an example of an apparatus for producing a chopped strand. As shown in FIG. 2, for example, a cake 20 produced using the spinning apparatus of FIG. 1 is set in creels 21, and the strands 16 are drawn from the cake 20 and bundled into a strand bundle (roving) 23 through a bundling guide 22. This strand bundle 23 is sprayed with water or a treating liquid using a spray device 24. Further, the strand bundle 23 is cut by a rotating blade 26 of a cutting device 25 to give chopped strands 27. In FIG. 1, the chopped strand may be produced not by winding the strand 16 into the cake 20 but by directly cutting the strand 16 by the rotating blade (chopper) 26 of the cutting device 25 (direct chopper). Alternatively, the chopped strand may be produced by cutting one strand 16. The chopped strand formed of a strand bundle may be herein referred to as "bundled chopped strand". The chopped strand formed of one strand may be herein referred to as "non-bundled chopped strand".

The chopped strand can be mixed, for example, with a cement composition when used. In one example, a mixture of the non-bundled chopped strand and a cement composition can form a coating member coating a surface of a main portion of a concrete product by spraying the mixture on the surface of the main portion. This coating member can reduce falling of a concrete material off the surface of the main portion. On the other hand, a mixture of the bundled chopped strand and a cement composition is suitable for reinforcement of a whole concrete product. The bundled chopped strand in this mixture plays the same role as straw included in a mud wall or mortar.

The chopped strand has a large specific surface area, and is in contact with cement in a large area. Therefore, the reinforcing glass fiber particularly preferably has an excellent alkali resistance in the chopped strand used for reinforcement of concrete products. This reinforcing glass fiber also needs to have an elastic modulus that is high enough for practical use.

[Fiber sheet]

The fiber sheet including the reinforcing glass fiber may be a woven fabric or a non-woven fabric. Examples of the woven fabric include cloths including a roving or a yarn as a warp and/or a weft. Examples of the non-woven fabric include chopped strand mats formed of the chopped strand. The non-woven fabric may be formed of a short fiber.

The fiber sheet can be impregnated, for example, with cement mortar or a resin such as an epoxy resin when used. The fiber sheet may have a surface coated by a layer (resin layer) formed of a resin when used. The fiber sheet impregnated with cement mortar or a resin and the fiber sheet having a surface coated by a resin layer may be herein called "protective sheets". A known method such as a hand lay-up method, a sheet molding compound (SMC) method, or a bulk molding compound (BMC) method can be used to manufacture the protective sheet.

<Concrete product>

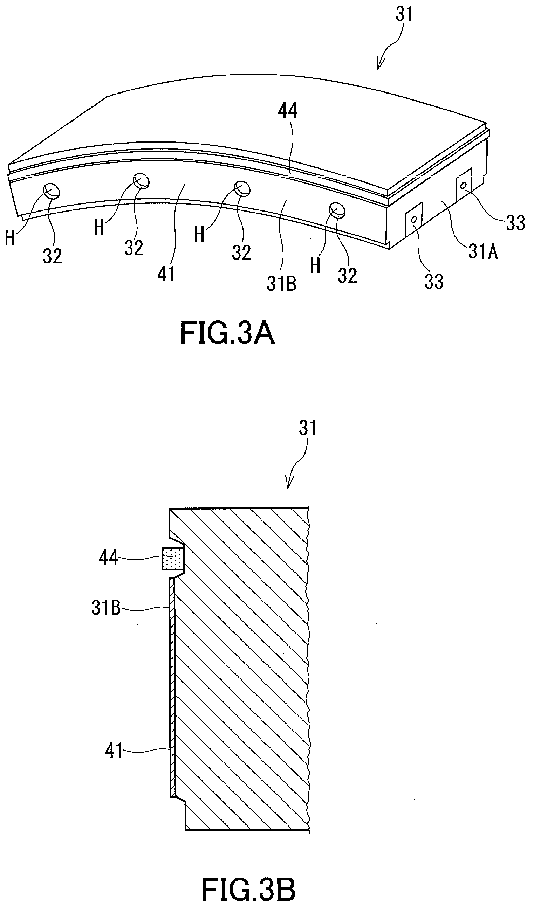

FIGS. 3A and 3B show an example of a concrete product including the above protective sheet. Specifically, FIGS. 3A and 3B show, as a concrete product, a segment 31 to be used for lining of tunnels by the shield method. The segment 31 is in the shape of an arc-shaped plate. A plurality of the segments 31 can form a tubular lining by being joined to each other in a borehole excavated by a shield machine. Specifically, a ring can be formed by joining the plurality of segments 31 to each other in a circumferential direction. The lining can be formed by joining the plurality of segments 31 to each other in an axial direction of the ring.

A circumferential joining end face 31A of the segment 31 is provided with a joint plate 33. A plurality of the segments 31 can be joined in the circumferential direction by fastening the joint plates 33 together and fixing the plurality of segments 31 to each other. One joining end face 31B of the segment 31 in the axial direction of the above ring is provided with a joining stick (not illustrated) protruding from the joining end face 31B. The other joining end face 31B is provided with a joining part 32 that is engageable with the joining stick. The joining part 32 has an insert hole H through which the joining stick is inserted.

FIG. 3B is an enlarged cross-sectional view of the segment 31 around the joining end face 31B. As shown in FIG. 3B, the segment 31 further includes a protective sheet 41 disposed on the joining end face 31B. In other words, in the segment 31, a surface of the protective sheet 41 forms the joining end face 31B. The protective sheet 41 functions as a coating member coating a surface of a main portion of the segment 31. When a plurality of the segments 31 are joined to each other, these joining end faces 31B, namely, the protective sheet 41, are in contact with each other.

As shown in FIGS. 3A and 3B, the segment 31 may further include a sealing member 44 that seals, in the case where a plurality of the segments 31 are joined to each other, the segments 31.

In the shield method, while a shield machine is excavating ground by a cutter at its front end portion, the shield machine extends a rod of a jack with a spreader of the jack in contact with a lining composed of the segments 31. This allows the shield machine to get a reaction force from the lining through the jack and move forward by means of the reaction force. As the shield machine includes a plurality of jacks, a plurality of spreaders are in contact with the lining. Therefore, when a pressing force exerted on the lining by the plurality of spreaders acts toward the external side of the lining, a stress may occur between two segments 31 adjacent to each other in the lining. The protective sheet 41 is capable of reducing occurrence of cracking near the joining end face 31B by cushioning this stress.

[Rod]

The rod including the reinforcing glass fiber is formed, for example, of a bundle of the reinforcing glass fibers. In one example, the rod is produced by weaving the reinforcing glass fibers into a braid. In the rod, the bundle of the reinforcing glass fibers may be bound with cement or a resin such as an epoxy resin. The rod can be used, for example, as a replacement for a reinforcing iron bar.

<Concrete product>

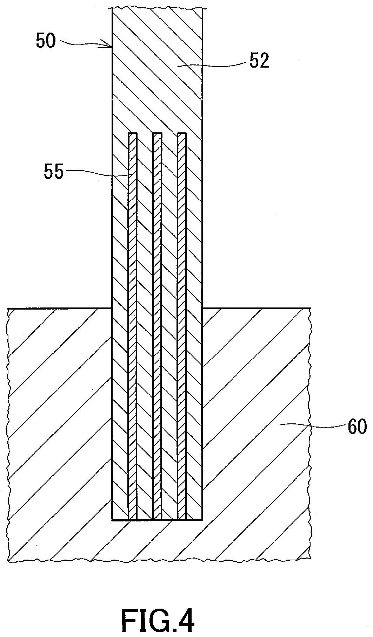

FIG. 4 shows an example of a concrete product including the above rod. Specifically, FIG. 4 shows a utility pole 50 as a concrete product. The utility pole 50 is partly embedded in ground 60, and stands upright. The utility pole 50 includes: a cement composition 52 including, for example, mortar and charged inside the utility pole 50; and a plurality of rods 55 embedded in the cement composition 52. The rods 55 are arranged parallel to each other along the direction of the utility pole 50 from the bottom of the utility pole 50. In the rod 55 used for reinforcement of the utility pole 50, the reinforcing glass fiber particularly preferably has an excellent elastic modulus. This reinforcing glass fiber also needs to have an alkali resistance that is high enough for practical use.

The utility pole 50 shown in FIG. 4 can be produced, for example, by inserting the rods 55 into a utility pole having a cavity inside through, for example, an opening and then charging the inside of the utility pole with the cement composition 52. The detail of this production method is described, for example, in JP 2006-002543 A. Incidentally, an aramid rod formed of aramid fibers is used in JP 2006-002543 A. The rod 55 including the reinforcing glass fiber of the present embodiment tends to have an alkali resistance higher than that of an aramid rod.

[Others]

Examples of the concrete product reinforced with the reinforcing glass fiber are not limited to those described above. The reinforcing glass fiber can be used as aggregates, reinforcing materials, and the like of various concrete products. Because the reinforcing glass fiber is also likely to have favorable mechanical properties and favorable thermal stability, the reinforcing glass fiber can also be included in concrete products required to have thermal resistance (for example, concrete products used in power plants, melting furnaces, coke ovens, and the like) and construction materials required to have fire resistance (for example, fire-resistant constructions and fire-resistant coating materials of buildings).

Furthermore, the reinforcing glass fiber can also be used after processed into other forms (such as a strand, a roving, a yarn, and a cord) than the above chopped strand, fiber sheet, and rod. Incidentally, a yarn is obtained by twisting one or more strands.

(Reinforcement of rubber product)

As described above, the reinforcing glass fiber may be used for reinforcement of rubber products. In another aspect, the present invention provides a rubber product including the reinforcing glass fiber of the present embodiment. In one example, the rubber product includes a rubber composition (matrix rubber) and the reinforcing glass fiber embedded in the rubber composition.

The reinforcing glass fiber may be processed as appropriate according to, for example, the kind of rubber product. Specifically, a cord, for example, can be used for reinforcement of the rubber product. In another aspect, the present invention provides a cord including the reinforcing glass fiber of the present embodiment cord.

[Cord]

The cord (rubber-reinforcing cord) includes a strand of the above reinforcing glass fibers (rubber-reinforcing fibers). The number of reinforcing glass fibers included in the strand is, for example, but not particularly limited to, 100 to 2000, and typically 200 to 600. In spinning into reinforcing glass fibers, the strand can be formed by bundling a given number of spun reinforcing glass fibers using a sizing agent, such as an elastomer-based sizing agent, commonly used for formation of a strand. The formed strand may be wound around, for example, a collet, and may be subjected to a given treatment such as drying.

It is preferable that in the cord, a plurality of the strands be bundled into a strand assembly. However, the number of strands forming the cord may be one. The strand or the strand assembly preferably includes 200 to 36000 reinforcing glass fibers, and more preferably includes 200 to 7800 reinforcing glass fibers. Additionally, the fineness based on corrected mass of the strand or the strand assembly is preferably 10 tex to 8350 tex, and more preferably 68 tex to 1430 tex.

In the cord, the strand may be coated by a first coating layer formed of a treating liquid A containing a latex and at least one selected from a resorcinol-formaldehyde condensate and a vulcanizing agent. The adherence between the cord and a matrix rubber in which the cord is embedded can be improved by coating the strand by the first coating layer. The first coating layer may coat one strand or a strand assembly formed of two or more strands.

The type of the latex is, for example, but not particularly limited to, at least one selected from a vinylpyridine-styrene-butadiene terpolymer (VP) latex, a chlorosulfonated polystyrene (CSM) latex, an acrylonitrile-butadiene copolymer (NBR) latex, and a nitrile-containing highly saturated polymer latex. The thermal resistance and the water resistance of the reinforcing cord can be improved by using any of these materials. Examples of the nitrile-containing highly saturated polymer include a material formed of a hydrogenated copolymer or terpolymer including an acrylonitrile as a structural unit (such as a material formed of hydrogenated NBR (H-NBR)) and a material including a saturated hydrocarbon and an acrylonitrile as structural units (such as a butadiene-ethylene-acrylonitrile terpolymer).

The resorcinol-formaldehyde condensate (RF) is not limited to a particular one, and a novolac-type, a resol-type, a mixed type of these, or the like may be used as the resorcinol-formaldehyde condensate (RF). A molar ratio between resorcinol (R) to formaldehyde (F) in the RF is preferably R:F = 1:1 to 3. Commercially-available RFs are generally liquids containing solids, and those in which the solids content is in the range of about 5 weight% to 10 weight% can be suitably used.

The vulcanizing agent is not limited to a particular one, and is, for example, at least one selected from a maleimide compound and an organic diisocyanate compound. When the treating liquid A contains the vulcanizing agent, the amount of the vulcanizing agent in the treating liquid A may be 5 to 100 parts by weight and is preferably 20 to 75 parts by weight with respect to 100 parts by weight of the solids in the latex. In these cases, a better balance between the flexibility of the cord and the adherence to the matrix rubber can be achieved.

The organic diisocyanate compound is not limited to a particular one, and, for example, hexamethylene diisocyanate, isophorone diisocyanate, methylene bis(4-cyclohexylisocyanate), toluene diisocyanate, xylene diisocyanate, naphthalene diisocyanate, or methylene bis(phenylisocyanate) may be used as the organic diisocyanate compound.

The treating liquid A may contain one of these organic diisocyanate compounds or two or more of these organic diisocyanate compounds. In the case where the organic diisocyanate compound is a substance, such as toluene diisocyanate or methylene bis(phenylisocyanate), having isomers regarding its substituent, the organic diisocyanate compound may be a mixture of the isomers. Alternatively, the organic diisocyanate compound may have an isocyanate group protected by a phenol or a lactam when used.

The maleimide compound is not limited to a particular one, and, for example, bismaleimide, phenylmaleimide, or diphenylmethane-4,4'-bismaleimide may be used as the maleimide compound.

The solids content in the treating liquid A is preferably 10 weight% to 40 weight%, and more preferably 25 weight% to 35 weight%. If the solids content is too low, formation of the first coating layer is insufficient. If the solids content is too high, it is difficult to control the amount of the treating liquid A applied to the strand and thus the first coating layer is likely to have a non-uniform thickness.

The treating liquid A may contain a base, such as ammonia, for adjustment of its pH, if necessary. Other than that, the treating liquid A may contain a stabilizer, an antioxidant, or the like. The treating liquid A may contain a filler such as carbon black, and, in this case, the cord can have a much better adherence to the matrix rubber.

A method commonly used for producing cords may be applied to formation of the first coating on the strand. For example, the strand (including the assembly) may be continuously immersed in a coating bath containing the treating liquid A, an excess of the treating liquid may be removed after the strand is drawn up from the coating bath, and the strand may be dried if necessary. The strand with the first coating may be directly used as a cord, or may be subjected to processing such as later-described twisting or formation of a second coating layer, if necessary.

The amount of the first coating layer formed may correspond to about 10 weight% to 30 weight% of the weight of the strand.

The cord may have a structure in which a bundle of two or more threads each formed by giving primary twists to the strand coated with the first coating layer is further given final twists. In this case, the cord can have a further improved strength and a much better bending fatigue resistance. The number of primary twists may be about 0.5 to 4 twists, preferably about 1.2 to 3 twists per 2.54 cm (1 inch) in the longitudinal direction. After about 2 to 20 threads, preferably about 6 to 15 threads formed by the primary twisting are bundled, 0.5 to 4 final twists, preferably about 1 to 2.8 final twists may be given to the bundle per 2.54 cm in the longitudinal direction.

The cord may be coated by a second coating layer including a rubber. In this case, the cord can have a much better adherence to the matrix rubber.

The type of the rubber is not limited to a particular one, and may be selected as appropriate according to, for example, the type of the matrix rubber. For example, when the matrix rubber is a nitrile-containing highly saturated polymer, the second coating layer preferably includes CSM as the above rubber because, in that case, a higher adherence is achieved. Alternatively, for example, when the matrix rubber is a rubber mixture including zinc polymethacrylate (ZDMA) dispersed in a nitrile-containing highly saturated polymer, the second coating layer preferably includes, as the above rubber, a nitrile-containing highly saturated copolymer or a rubber mixture having the same composition as that of the matrix rubber because, in that case, a higher adherence is achieved.

The second coating layer may be formed, for example, by impregnating the strand (including the assembly), the strand (including the assembly) coated by the first coating layer, or the thread formed by twisting the strand with a treating liquid B containing the rubber or a rubber precursor dissolved therein and then drying the strand or thread. Since the CSM and the nitrile-containing highly saturated polymer dissolve in aromatic hydrocarbons such as benzene, toluene, and xylene, halogenated hydrocarbons such as trichloroethylene, ketones such as methyl ethyl ketone, and esters such as ethyl acetate, the treating liquid B may contain any of these organic substances as its solvent.

The treating liquid B may contain a vulcanizing agent. Other than the above maleimide compound and the above organic diisocyanate compound, examples of the vulcanizing agent may include sulfur, organic peroxides such as dicumyl peroxide and 1,3-bis(t-butylperoxy-m-isopropyl)benzene, and aromatic nitroso compounds such as p-dinitronaphthalene and p-dinitrosobenzene. The treating liquid B may contain an inorganic filler, an antioxidant, a vulcanization assistant, or a plasticizer, if necessary.

The content of the substances (such as the rubber and the vulcanizing agent) other than the solvent in the treating liquid B may be determined as appropriate according to the types of the substances. The second coating layer can be easily formed when the content of the substances in the treating liquid B is about 3 weight% to 25 weight%, preferably about 5 weight% to 15 weight%. The content of the rubber or the rubber precursor in the substances other than the solvent is preferably about 20 weight% to 60 weight%. When the treating liquid B contains the vulcanizing agent, the vulcanizing agent content in the substances other than the solvent is preferably about 0.5 weight% to 30 weight%.

To form the second coating layer, for example, the treating liquid B may be applied to a surface of the strand (including the assembly) or the twisted thread such that the amount of the applied treating liquid B, as calculated in terms of the amount of the substances other than the solvent, is about 1 weight% to 15 weight%, preferably about 2 weight% to 6 weight% of the weight of the strand.

<Rubber product>

Examples of a rubber product reinforced with the above cord include a rubber belt, a rubber tire, and a rubber hose. One example of the rubber belt is a transmission belt. Examples of the transmission belt include a synchronous transmission belt and a friction transmission belt. One example of the synchronous transmission belt is a toothed belt typified by an automotive timing belt. Examples of the friction transmission belt include a flat belt, a round belt, a V belt, and a V-ribbed belt. The rubber tire is typically an automotive tire or a bicycle tire. In the cord used for reinforcement of rubber products, the reinforcing glass fiber particularly preferably has an excellent elastic modulus.

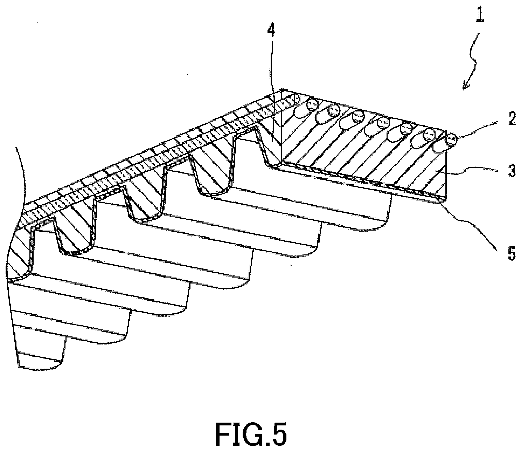

FIG. 5 shows one example of a structure of a rubber belt including a cord. A rubber belt 1 has the shape of what is called a toothed belt, and includes a matrix rubber 3 and a plurality of cords 2 embedded in the matrix rubber 3. The cords 2 are arranged parallel to each other along the longitudinal direction of the rubber belt 1, i.e., the direction orthogonal to the belt width direction in which a projecting portion 4 being a "tooth" extends. A facing fabric 5 is adhered onto a surface of the rubber belt 1 for the purpose of, for example, reducing abrasion, the surface having the projecting portion 4 thereon.

[Others]

The reinforcing glass fiber can also be used after processed into forms other than the above cord. Examples of the other forms include the forms described above for the concrete product.

(Reinforcement of plastic products)

As described above, the reinforcing glass fiber may be used for reinforcement of plastic products (resin products). In another aspect, the present invention provides a plastic product including the reinforcing glass fiber of the present embodiment. In a preferred embodiment, the plastic product includes a resin composition (matrix resin) and the reinforcing glass fiber embedded in the resin composition. In another preferred embodiment, the plastic product includes a main portion and a coating member coating a surface of the main portion, and the coating member includes the reinforcing glass fiber. The coating member may further include, for example, a material such as a resin. The plastic product reinforced with the reinforcing glass fiber is sometimes referred to as "fiber reinforced plastic (FRP)".

The matrix resin may include a thermosetting resin or a thermoplastic resin. The thermosetting resin is not limited to a particular one. Examples of the thermosetting resin include epoxy resins, modified epoxy resins such as vinyl ester resins, phenolic resins, unsaturated polyester resins, polyimide resins, and bismaleimide resins. The thermoplastic resin is not limited to a particular one. Examples of the thermoplastic resin include polyolefin resins, polyamide resins, polycarbonate resins, polyphenylene sulfide resin, and polyether ether ketone resin. The resin product including the thermoplastic resin can be easily produced by injection molding, stampable molding, or the like.

The reinforcing glass fiber may be processed as appropriate according to, for example, the kind of plastic product. Specifically, the chopped strand, the fiber sheet, or the like can be used for reinforcement of the plastic product. The reinforcing glass fiber can also be used after processed into other forms than the chopped strand and the fiber sheet. Examples of the other forms include the forms described above for the concrete product.

<Plastic product>

The plastic product reinforced with the reinforcing glass fiber of the present embodiment can be used in applications such as sporting goods, vehicles of automobiles and the likes, vessels, construction materials, aircraft, septic tanks, bathtubs, blades for wind power generation, square timbers, poles, tanks, pipes, sewage pipes (drainage pipes), fuel tanks, and household electric appliances.

Examples of the plastic product used in sporting goods include fishing lines, fishing rods, golf club shafts, skies, canoes, and rackets and strings for tennis and badminton. Examples of the plastic product used in vehicles include vehicle bodies, lamp housings, front end panels, bumpers, seat housings, and driveshafts. Examples of the plastic products used in vessels include bodies of vessels, masts, and decks. Examples of the plastic product used in aircraft include primary structural members, secondary structural members, interior materials, seats, and accessories. Examples of the plastic product used in household electric appliances include boards, panels, switchgears, insulating devices, and bodies of household electric appliances.

The reinforcing glass fiber included in plastic products, such as drainage pipes, used in natural environment can have contact with an acid liquid such as acid rain. Therefore, this reinforcing glass fiber particularly preferably has an excellent acid resistance. This reinforcing glass fiber also needs to have an elastic modulus that is high enough for practical use.

The reinforcing glass fiber of the present embodiment can also be included in high-temperature thermal insulating materials included in mufflers and engine parts of vehicles, furnaces, and the like. The reinforcing glass fiber of the present embodiment can also be included in separators included in batteries such as lead storage batteries.

In another aspect, the present invention provides a rubber-reinforcing fiber, wherein

the sum of the $SiO_2$ content and the $Al_2O_3$ content is 40 to 70 mass%,
a mass ratio calculated by $Al_2O_3/(SiO_2 + Al_2O_3)$ is 0.15 to 0.40,

the $Fe_2O_3$ content is 16 to 25 mass%, and
the CaO content is 5 to 30 mass%.

In one embodiment of the present invention, the above rubber-reinforcing fiber is a long fiber.
In one embodiment of the present invention, the above rubber-reinforcing fiber has a tensile strength of 4500 $N/mm^2$ or more.
In one embodiment of the present invention, the above rubber-reinforcing fiber has a tensile elastic modulus of $1.0 \times 10^5$ $kN/mm^2$ or more.
In one embodiment of the present invention, the above rubber-reinforcing fiber has a glass-transition point Tg of 850°C or higher.
In another aspect, the present invention provides a rubber-reinforcing cord including a strand formed of a bundle of the above rubber reinforcing fibers.
In another aspect, the present invention provides a rubber product reinforced with the above rubber-reinforcing cord.

EXAMPLES

Hereinafter, the present invention will be described in more detail by Examples and Comparative Examples.
Glass raw materials were weighed to give each glass composition shown in Tables 4 and 5, and were mixed to homogeneity to prepare a raw material mixture batch. Silicon dioxide, aluminum oxide, calcium carbonate, iron(III) oxide, and so on were used as the glass raw materials.
Next, the prepared raw material mixture batch was molten at 1500 to 1600°C using an electric furnace, and was kept molten for about 4 hours until the composition became uniform. After that, part of the resulting molten glass composition (glass melt) was poured onto an iron plate, and was slowly cooled to room temperature in an electric furnace to obtain a plate-shaped glass specimen to be used for evaluation.

(Elastic modulus)

Plate-shaped samples having dimensions of $25 \times 25 \times 5$ mm were fabricated by cutting the glass specimens and mirror-polishing every surface thereof. The density $\rho$ of each sample was measured by Archimedes' principle. The elastic modulus of each sample was measured according to the ultrasonic pulse method in JIS R 1602-1995. Specifically, each sample used in the above density measurement was used to measure, for longitudinal and transverse waves, the sound speed at which an ultrasonic pulse propagates through the sample. The sound speeds and the above density were substituted in the above formula to calculate the elastic modulus E. The propagation speeds were evaluated using an ultrasonic thickness gage MODEL 25DL PLUS manufactured by Olympus Corporation by dividing the time required by a 20 kHz ultrasonic pulse to propagate in the thickness direction of the sample, be reflected, and then come back by the propagation distance (twice the thickness of the sample).

(Alkali resistance, acid resistance)

Each glass specimen was crushed, and was measured for its mass decrease rate $\Delta W_{BASE}$ and mass decrease rate $\Delta W_{ACID}$ by the above methods.
Each of the obtained samples was measured for the above properties. Tables 4 and 5 show the results.

[Table 4]

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| $SiO_2$ | mol% | 57.5 | 62.5 | 67.5 | 62.5 | 67.5 | 59 | 55 | 67.5 | 52 | 52.5 | 75 |
| $Al_2O_3$ | | 7.5 | 7.5 | 7.5 | 5 | 5 | 7.5 | 7.5 | 5 | 20 | 10 | 7.5 |
| CaO | | 27.5 | 22.5 | 17.5 | 25 | 20 | 27.5 | 27.5 | 23.5 | 23 | 24.5 | 4.5 |
| $Fe_2O_3$ | | 7.5 | 7.5 | 7.5 | 7.5 | 7.5 | 6 | 10 | 4 | 5 | 13 | 13 |

(continued)

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| $SiO_2$ | mass% | 49.6 | 53.8 | 57.9 | 54.7 | 58.9 | 52.1 | 45.8 | 62.2 | 43.1 | 41.4 | 59.3 |
| $Al_2O_3$ | | 11.0 | 11.0 | 10.9 | 7.4 | 7.4 | 11.2 | 10.6 | 7.8 | 28.1 | 13.4 | 10.1 |
| CaO | | 22.2 | 18.1 | 14.0 | 20.4 | 16.3 | 22.6 | 21.4 | 20.2 | 17.8 | 18.0 | 3.3 |
| $Fe_2O_3$ | | 17.2 | 17.2 | 17.1 | 17.4 | 17.4 | 14.1 | 22.2 | 9.8 | 11.0 | 27.2 | 27.3 |
| $Al_2O_3/(Al_2O_3 + SiO_2)$ | | 0.18 | 0.17 | 0.16 | 0.12 | 0.11 | 0.18 | 0.19 | 0.11 | 0.39 | 0.24 | 0.15 |
| Devitrification | | No | No | No | No | No | No | No | No | Yes | Yes | Yes |
| Elastic modulus [MPa] | | 94 | 91 | 88 | 91 | 88 | 93 | 96 | 84 | - | - | - |
| Mass decrease rate $\Delta W_{ACID}$ [mass%] | | 1.32 | 0.19 | 0.07 | 0.09 | 0.02 | 0.15 | - | - | - | - | - |
| Mass decrease rate $\Delta W_{BASE}$ [mass%] | | 0.12 | 0.18 | 0.24 | 0.12 | 0.13 | 0.08 | 0.10 | - | - | - | - |

[Table 5]

| | | Comparative Example | |
|---|---|---|---|
| | | 5 | 6 |
| $SiO_2$ | mass% | 67.1 | 54.8 |
| $B_2O_3$ | | 4.7 | 6 |
| $Al_2O_3$ | | 4 | 14.5 |
| MgO | | 2.6 | 0.4 |
| CaO | | 6.5 | 22.8 |
| $Li_2O$ | | 0.6 | - |
| $Na_2O$ | | 10.2 | 0.5 |
| $K_2O$ | | 0.8 | 0.3 |
| ZnO | | 3.6 | - |
| $ZrO_2$ | | - | - |
| $Fe_2O_3$ | | - | 0.3 |
| Total | | 100.1 | 99.6 |
| $Al_2O_3/(Al_2O_3 + SiO_2)$ | | 0.06 | 0.21 |
| Devitrification | | No | No |
| Elastic modulus [MPa] | | 78 | 83 |
| Mass decrease rate $\Delta W_{ACID}$ [mass%] | | 0.10 | Not measurable |
| Mass decrease rate $\Delta W_{BASE}$ [mass%] | | Not measurable | 0.27 |

As can be seen from Tables 4 and 5, glass compositions having a high elastic modulus, an excellent alkali resistance, and an excellent acid resistance were obtained in Examples. It can be said that reinforcing glass fibers formed of these glass compositions are suitable for reinforcement of various products such as concrete products.

As can be seen from the results of Examples 1 to 3, in the case where the $SiO_2$ content is decreased and the CaO content is increased, it is likely that the elastic modulus increases, the mass decrease rate $\Delta W_{BASE}$ decreases, and the alkali resistance is improved. In this case, it is also likely that the mass decrease rate $\Delta W_{ACID}$ increases and the acid resistance decreases.

As can be seen from the results of Examples 2 and 4 and the results of Examples 3 and 5, in the case where the $Al_2O_3$ content is decreased and the CaO content is increased, it is likely that both the alkali resistance and the acid resistance are improved.

In this case, the elastic modulus varies little.

As can be seen from the results of Examples 1, 6, and 7, in the case where the $SiO_2$ content is decreased and the $Fe_2O_3$ content is increased, the elastic modulus is likely to increase. In this case, the alkali resistance has no visible correlation to the composition.

As can be seen from Comparative Examples 1 and 2, in the case where the $Fe_2O_3$ content is lower than 12 mass%, a small $Al_2O_3/(Al_2O_3 + SiO_2)$ value decreases the elastic modulus while a large $Al_2O_3/(Al_2O_3 + SiO_2)$ value causes devitrification. As can be seen from Comparative Examples 3 and 4, in the case where the $Fe_2O_3$ content is more than 25 mass%, devitrification occurs. It is difficult to produce reinforcing glass fibers using the devitrified glass compositions of Comparative Examples 2 to 4.

Comparative Examples 5 and 6 respectively correspond to glass compositions of C-glass and E-glass, which are general-purpose chemical-resistant glasses. These glass compositions have a low elastic modulus and do not achieve both the acid resistance and the alkali resistance at once.

INDUSTRIAL APPLICABILITY

The reinforcing glass fiber of the present embodiment is suitable for reinforcement of various products such as concrete products.

**Claims**

1. A reinforcing glass fiber comprising:

   $SiO_2$;

   $Al_2O_3$;

   and

   $Fe_2O_3$,

   wherein
   an $Fe_2O_3$ content is 12 to 25 mass%.

2. The reinforcing glass fiber according to claim 1, further comprising CaO, wherein a CaO content is 5 to 30 mass%.

3. The reinforcing glass fiber according to claim 1 or 2, wherein

   a sum of a $SiO_2$ content and an $Al_2O_3$ content is 40 to 70 mass%, and
   a mass ratio calculated by $Al_2O_3/(SiO_2 + Al_2O_3)$ is 0.10 to 0.40.

4. The reinforcing glass fiber according to any one of claims 1 to 3, having a tensile strength of 2500 $N/mm^2$ or more.

5. The reinforcing glass fiber according to any one of claims 1 to 4, having an elastic modulus of 80 MPa or more.

6. The reinforcing glass fiber according to any one of claims 1 to 5, having a glass-transition point Tg of 700°C or higher.

7. The reinforcing glass fiber according to any one of claims 1 to 6, wherein a mass decrease rate $\Delta W_{BASE}$ determined for a case where the reinforcing glass fiber is immersed for 1 hour in an aqueous sodium hydroxide solution having a temperature of 99°C and a concentration of 10 mass% is 0.30 mass% or less.

8. The reinforcing glass fiber according to any one of claims 1 to 7, for use in reinforcement of concrete products.

9. The reinforcing glass fiber according to claim 8, wherein a mass decrease rate $\Delta W_{BASE}$ determined for a case where the reinforcing glass fiber is immersed for 1 hour in an aqueous sodium hydroxide solution having a temperature of 99°C and a concentration of 10 mass% is 0.25 mass% or less.

10. The reinforcing glass fiber according to any one of claims 1 to 7, for use in reinforcement of rubber products.

11. The reinforcing glass fiber according to any one of claims 1 to 7, for use in reinforcement of plastic products.

12. The reinforcing glass fiber according to claim 10 or 11, having an elastic modulus of 85 MPa or more.

13. The reinforcing glass fiber according to claim 12, having an elastic modulus of 90 MPa or more.

14. The reinforcing glass fiber according to any one of claims 8 and 10 to 13, further comprising CaO, wherein

 a CaO content is 18 to 30 mass%, and
 the $Fe_2O_3$ content is 15 to 25 mass%.

15. The reinforcing glass fiber according to any one of claims 8 and 10 to 13, further comprising CaO, wherein

 a CaO content is 15 to 25 mass%, and
 the $Fe_2O_3$ content is 15 to 23 mass%.

16. The reinforcing glass fiber according to any one of claims 1 to 15, being a long fiber.

17. A chopped strand comprising the reinforcing glass fiber according to any one of claims 1 to 15.

18. A fiber sheet comprising the reinforcing glass fiber according to any one of claims 1 to 15.

19. A rod comprising the reinforcing glass fiber according to any one of claims 1 to 15.

FIG.1

FIG.2

31

44

H 32 H 32 41 H 32 31B H 32 33 33 31A

**FIG.3A**

31

44

31B

41

**FIG.3B**

FIG.4

FIG.5

# INTERNATIONAL SEARCH REPORT

| International application No. |
|---|
| **PCT/JP2021/045870** |

### A. CLASSIFICATION OF SUBJECT MATTER

*C03C 13/00*(2006.01)i; *B29B 11/16*(2006.01)i; *D02G 3/18*(2006.01)i; *D02G 3/44*(2006.01)i; *B29K 105/10*(2006.01)n
FI: C03C13/00; D02G3/18; D02G3/44; B29B11/16; B29K105:10

According to International Patent Classification (IPC) or to both national classification and IPC

### B. FIELDS SEARCHED

Minimum documentation searched (classification system followed by classification symbols)

C03C13/00; B29B11/16; D02G3/18; D02G3/44; B29K105/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

INTERGLAD

### C. DOCUMENTS CONSIDERED TO BE RELEVANT

| Category* | Citation of document, with indication, where appropriate, of the relevant passages | Relevant to claim No. |
|---|---|---|
| X | JP 60-231440 A (WALT DISNEY PRODUCTIONS) 18 November 1985 (1985-11-18) p. 5, lower left column, line 15 to p. 6, upper right column, line 11, p. 7, lower left column, lines 15-18, p. 8, lower right column 6, p. 9, lower right column, line 7 | 1-5, 7-9, 14-15 |
| Y | | 8-13, 16-19 |
| A | | 6 |
| Y | JP 2019-11234 A (NIPPON SHEET GLASS CO LTD) 24 January 2019 (2019-01-24) paragraphs [0001], [0051]-[0052] | 10, 12-13, 16 |
| A | | 1-9, 11, 14-15, 17-19 |
| X | JP 2019-531253 A (RES INST IND SCIENCE & TECH) 31 October 2019 (2019-10-31) paragraphs [0002]-[0005], [0061]-[0067] | 1-7, 11-15 |
| Y | | 8-13, 16-19 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 January 2022** | **08 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2021/045870** |

**C. DOCUMENTS CONSIDERED TO BE RELEVANT**

| Category* | Citation of document, with indication, where appropriate, of the relevant passages | Relevant to claim No. |
| --- | --- | --- |
| X | JP 50-29827 A (JAPAN ASBESTOS CO., LTD.) 25 March 1975 (1975-03-25) p. 2, upper right column, line 12 to lower left column, line 11, p. 3, upper left column, lines 14-17 | 1-9 |
| Y | | 10-13, 16-19 |
| A | | 14-15 |
| X | JP 2012-532830 A (ROCKWOOL INTERNATIONAL A/S) 20 December 2012 (2012-12-20) paragraphs [0015], [0044], [0046] | 1-7, 18 |
| Y | | 8-13, 16-17, 19 |
| A | | 14-15 |
| Y | JP 2004-189583 A (NIPPON ELECTRIC GLASS CO LTD) 08 July 2004 (2004-07-08) paragraphs [0040], [0052] | 17-19 |
| A | | 1-16 |

Form PCT/ISA/210 (second sheet) (January 2015)

23

**INTERNATIONAL SEARCH REPORT**
**Information on patent family members**

International application No.

**PCT/JP2021/045870**

| Patent document cited in search report | | | Publication date (day/month/year) | Patent family member(s) | | | Publication date (day/month/year) |
|---|---|---|---|---|---|---|---|
| JP | 60-231440 | A | 18 November 1985 | EP | 159173 | A2 | |
| | | | | p. 13, lines 1-5, p. 16, lines 1-12, table IV | | | |
| JP | 2019-11234 | A | 24 January 2019 | US | 2020/0140320 | A1 | |
| | | | | paragraphs [0001], [0078]-[0079] | | | |
| | | | | WO | 2019/003464 | A1 | |
| | | | | EP | 3647286 | A1 | |
| | | | | CN | 110809565 | A | |
| | | | | BR | 112019027258 | A | |
| | | | | JP | 2019-11244 | A | |
| | | | | JP | 6343112 | B1 | |
| JP | 2019-531253 | A | 31 October 2019 | WO | 2018/066803 | A1 | |
| | | | | KR | 10-2018-0037559 | A | |
| | | | | CN | 109790063 | A | |
| JP | 50-29827 | A | 25 March 1975 | US | 3928049 | A | |
| | | | | column 3, lines 35-45, column 5, line 48 to column 6, line 2, example 1 | | | |
| | | | | GB | 1468943 | A | |
| JP | 2012-532830 | A | 20 December 2012 | US | 2012/0183758 | A1 | |
| | | | | paragraph [0045], example 1 | | | |
| | | | | WO | 2011/006875 | A2 | |
| | | | | EP | 2454210 | A2 | |
| | | | | CA | 2767739 | A | |
| | | | | KR | 10-2012-0052288 | A | |
| | | | | EA | 201270159 | A | |
| JP | 2004-189583 | A | 08 July 2004 | US | 2006/0165968 | A1 | |
| | | | | paragraphs [0035], [0053] | | | |
| | | | | WO | 2004/035497 | A1 | |
| | | | | EP | 1561732 | A1 | |
| | | | | CA | 2501961 | A | |
| | | | | AU | 2003275551 | A | |

Form PCT/ISA/210 (patent family annex) (January 2015)

**EP 4 265 574 A1**

**Patent documents cited in the description**

- WO 2006057405 A1
- JP 2006002543 A